# EUROPEAN PATENT APPLICATION

(11) **EP 2 196 689 A2**
(43) Date of publication of application: **16.06.2010**
(21) Application number: 09175073.7
(22) Date of filing: 05.11.2009
(51) Int. Cl.: F16C 33/78, F16J 15/32

(54) **Sealed rolling bearing**

(30) Priority: 09.12.2008 JP 2008313253
(71) Applicant: NTN Corporation, Osaka-shi, Osaka (JP)
(72) Inventor: Sugiura, Mitsuhiro, Iwata-shi Shizuoka 437-0037 (JP)
(74) Representative: Grünecker, Kinkeldey, Stockmair & Schwanhäusser Anwaltssozietät

(57) **Abstract**

When a sealed rolling bearing is subjected to temperature increase caused by the friction heat of the seal and external heat and is subsequently cooled down, negative pressure is created in an internal space of the bearing and causes a seal lip of the bearing to stick to a seal groove, resulting in abrasion of the seal lip. The present invention solves the problem while maintaining scaling performance of the seal lip. In a sealed rolling bearing in which a scaling member 17 has a seal lip 28 on its edge and the seal lip 28 abuts against a raceway-side groove wall 23 of a seal groove 21 adjacent to an inner raceway, the seal lip 28 has a contact tip 35 shaped into an arc whose radius of curvature R ranges from 0.1 mm to less than 0.2 mm.

## Description

The priority application Number JP2008-313253 upon which this Patent application is based is hereby incorporated by reference.

### BACKGROUND OF THE INVENTION

### Field of the Invention

This invention relates to rolling bearings, and more particularly to rolling bearings of the type in which grease is sealed in the space created between an inner ring and an outer ring. These grease-sealed rolling bearings are used in supporting members for a revolving shaft in various mechanical apparatuses such as electromagnetic clutches and pulleys. A rolling bearing according to the present invention has a seal on each side of the inner ring and outer ring to seal grease in the interior of the bearing. These seals are attached to grooves formed on opposite ends of the inner peripheral surface of the outer ring and include seal lips made of elastic materials like rubber. These seal lips are in contact with the outer peripheral surface of the inner ring to prevent the grease inside the bearing from leaking out. More specifically, this invention relates to the shape of contact-type seal lips.

### Description of the Related Art

Conventional sealed rolling bearings have the function of preventing grease inside the bearing from leaking outside and the function of preventing foreign substances from entering the interior of the bearing. With these functions, the sealed rolling bearings are used as a supporting member for a revolving shaft of various mechanical apparatuses. Sealed rolling bearings of this type generally include an inner ring with an inner raceway on its outer peripheral surface, an outer ring with an outer raceway on its inner peripheral surface, a plurality of rolling elements rotatably disposed between the inner raceway and outer raceway, and a sealing member that seals the space created between the outer ring and inner ring. The sealing member is made of an elastic member and a metal core reinforcing the elastic member and is shaped into an annulus as a whole. In addition, the sealing member has an engaging portion, which fits into an engage groove formed at an end of the inner peripheral surface of the outer ring, on its outer rim and a seal lip, which is in contact with the outer peripheral surface of the inner ring. (See Japanese unexamined patent publication Nos. 2008-14484, 2007-51761 and 2001-140907)

### SUMMARY OF THE INVENTION

The above-described seal lip of the sealing member makes elastic contact with the seal groove formed on the outer peripheral surface of the inner ring, thereby preventing the grease in the interior of the bearing from leaking into the seal groove as well as preventing foreign substances and muddy water from penetrating from the outside into the interior of the bearing. The seal groove is formed at a side of the outer raceway on the outer peripheral surface of the inner ring.

For the purpose of improving sealing performance of such contact-type seals, general approaches include increasing the contact area between the seal lip and the seal groove and raising the contact pressure of the seal lip.

However, the increased contact area between the seal lip and seal groove generates more frictional heat between the seal lip and seal groove with the rotation of the rolling bearing.

Due to frictional heat and external heat, the temperature of the rolling bearing increases; when it is subsequently cooled down, the pressure inside the rolling bearing becomes negative with respect to the outside pressure. It is well known that this negative pressure causes the seal lip to stick firmly to the seal groove and a surge in the torque of the bearing, which is so-called adherent phenomenon. This results in abrasion of the seal lip.

A mechanism for eliminating the adhesion of the seal lip is slits provided in the seal lip; however, this approach may significantly deteriorate sealing performance. In order to overcome the deficiency of the conventional mechanism for avoiding the seal lip adhesion, there has been a growing demand for design concepts of seal lip that may be adhered but can be resistant to abrasion.

Possible approaches for preventing abrasion of the adhered seal lip include reduction of the reaction force of the seal lip and reduction of pressure on the contact area. The reduction of reaction force of the seal lip decreases interference and pressing force of the seal, causing possible deterioration of sealing performance. In view of the problems, the present invention has an object to prevent seal lip abrasion while maintaining the interference and pressing force of the seal lip.

In order to solve the above-described problems, the sealed rolling bearing according to the present invention includes an inner ring having an inner raceway on its outer peripheral surface, an outer ring having an outer raceway on its inner peripheral surface, a plurality of rolling elements rotatably disposed between the inner raceway and outer raceway, and a sealing member that is made of an elastic member and a metal core reinforcing the elastic member, is shaped into an annulus as a whole and has an outer rim engaged with an engage groove formed entirely around a side of the inner peripheral surface of the outer ring. The inner ring includes a seal groove at a side of the inner raceway and a shoulder portion formed between the seal groove and an edge of the inner ring. In the sealed rolling bearing in which the inner rim of the sealing member, which corresponds to an edge of the elastic member, is provided with a seal lip that abuts against the raceway-side groove wall of the seal groove adjacent to the inner raceway, the seal lip has a contact tip shaped into an arc whose radius of curvature R ranges from 0.1 mm to less than 0.2 mm.

According to the present invention, setting the radius of curvature of the contact tip of the seal lip within the above range can prevent abrasion of the seal lip, even if seal adhesion occurs, while maintaining sealing performance.

### BRIEF DESCRIPTION OF THE DRAWINGS

FIG. 1 is a cross-sectional view of a part of the bearing according to an embodiment.

FIG. 2 is a cross-sectional view showing a partially enlarged bearing of FIG. 1.

FIG. 3 is a cross-sectional view showing a partially enlarged bearing of FIG. 2.

FIG. 4 is a cross-sectional view showing a partially enlarged bearing of FIG. 3.

### DETAILED DESCRIPTION OF THE PREFERRED EMBODIMENT

Referring now to the drawings, an embodiment of the present invention will be described in detail. Through the drawings of the embodiment, like components are denoted by like numerals and will not be further explained.

The description about the embodiment of the present invention will be made with Example 1 shown in the accompanied drawings.

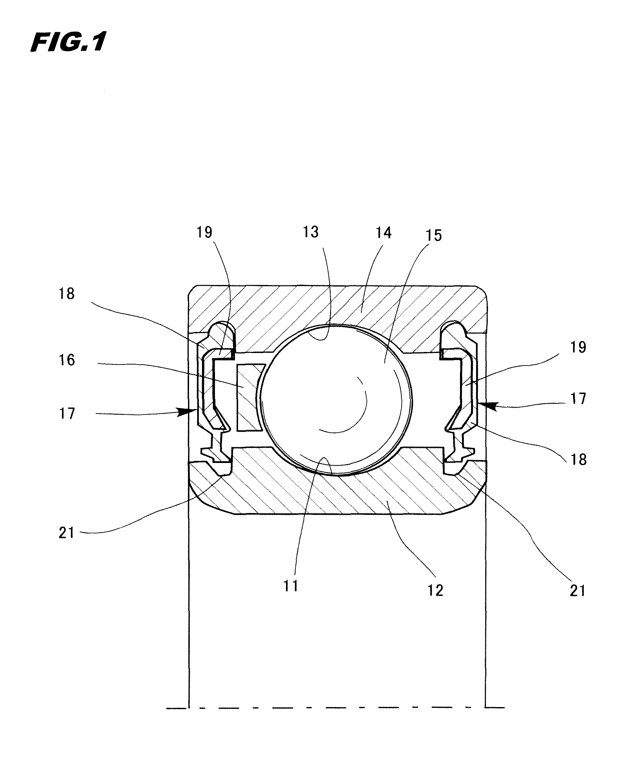

[Example 1] As shown in FIG. 1, the sealed rolling bearing of Example 1 includes an inner ring 12 having an inner raceway 11 on its outer peripheral surface, an outer ring 14 having an outer raceway 13 on its inner peripheral surface, a plurality of rolling elements 15 rotatably disposed between the inner raceway 11 and outer raceway 13, a retainer 16 holding the respective rolling elements 15, and sealing members 17 and 17 that are interposed between ends of opposed surfaces of the inner ring 12 and outer ring 14.

Each of the sealing members 17 is an annular elastic member 18 reinforced with a metal core 19 and has an outer rim fitted entirely into an engage groove formed on an end of the inner peripheral surface of the outer ring 14. The elastic member 18 may be made of nitrile rubber, acrylic rubber, fluorine-contained rubber or the like.

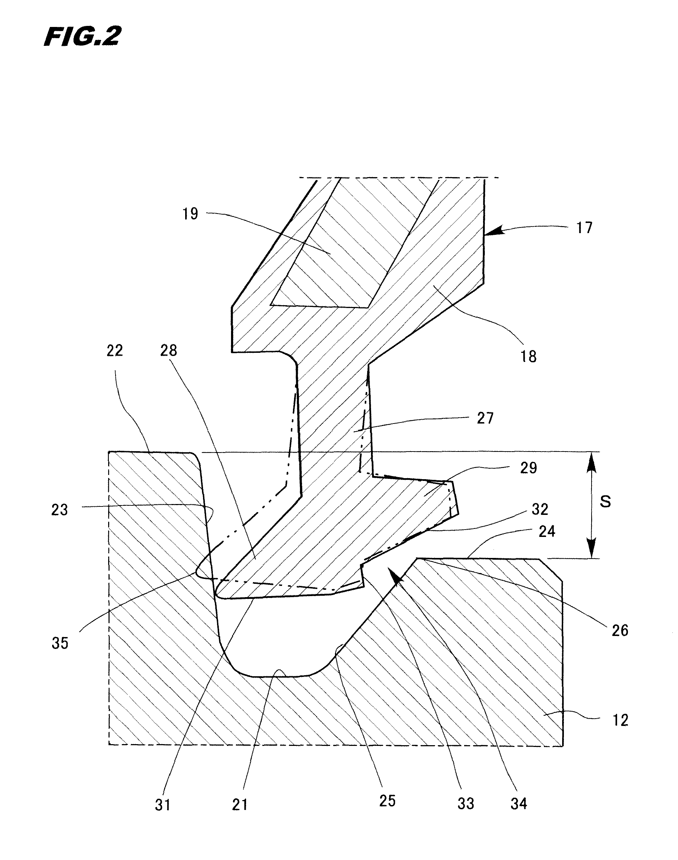

Shown in FIG. 2 is a seal groove 21 that is formed at a side of the inner raceway 11 of the inner ring 12. The seal groove 21 includes a raceway-side groove wall 23 adjacent to the inner raceway and a shoulder portion-side groove wall 25 adjacent to a shoulder portion 24. The raceway-side groove wall 23 rises up at an angle from the bottom of the groove 21 toward a raceway-side flat surface 22 adjacent to the inner raceway, while the shoulder portion-side groove wall 25, which is opposed to the raceway-side groove wall 23, rises up at an angle toward the shoulder portion 24. A shoulder portion-side corner 26 is formed on the boundary between the groove wall 25 and shoulder portion 24. The shoulder portion 24 has a diameter smaller than that of the raceway-side flat surface 22 by a predetermined size S.

Formed on an edge of the elastic member 18, which corresponds to the inner rim of the sealing member 17, is a neck part 27. With the neck part 27, a seal lip 28, which abuts against the raceway-side groove wall 23 of the seal groove 21, and a labyrinth lip 29, which projects above the shoulder portion 24, are formed in one piece.

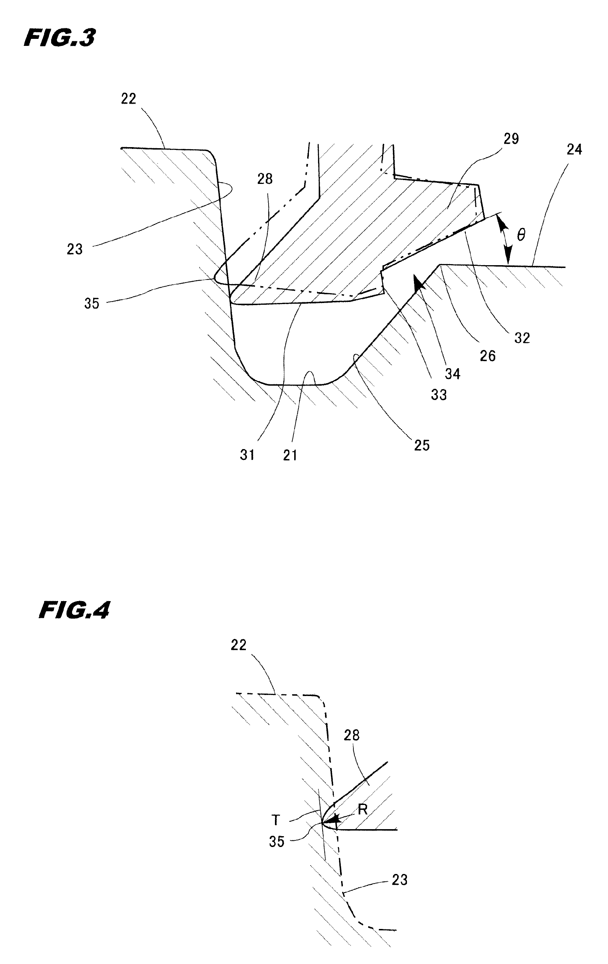

The bottom surface 31 of the seal lip 28 and the bottom surface 32 of the labyrinth lip 29 are in proximity to each other above the shoulder portion-side groove wall 25. The bottom surface 31 of the seal lip 28 has a relatively smaller diameter than that of the bottom surface 32 of the labyrinth lip 29. The inner ends of the bottom surfaces 31 and 32 are continuously connected through a radially extending step portion 33. The bottom surface 32 of the labyrinth lip 29 is an inclined surface that gradually increases its diameter toward the outer end from the step portion 33. In addition, the bottom surface 32 is inclined at a constant angle of θ with respect to the shoulder portion 24 (see FIG. 3) and extends over the shoulder portion-side corner 26.

The shoulder portion 24, and shoulder portion-side groove wall 25 and shoulder portion-side corner 26 form a bent wall on the inner ring 12, while the step portion 33 and bottom surfaces 31, 32 form a bent wall on the sealing member 17. The bent walls face each other, and the clearance created between the bent walls defines a labyrinth seal 34.

The seal lip 28 and labyrinth lip 29 are pushed back by the contact tip 35 of the seal lip 28 making contact with the raceway-side groove wall 23 at a predetermined pressure, whereby the neck part 27 is slightly bent. FIGS. 2 and 3 show the original shape of the sealing member 17, before being deformed, by a dashed double-dotted line and the bent shape, after being deformed, by a solid line.

As shown in FIG. 4, a tangent T at the extremity of the contact tip 35 before deformation is parallel with the raceway-side groove wall 23. The radius of curvature R of the contact tip 35 is set to 0.1 mm or more in order to reduce abrasion caused by adhesion of the seal lip 28, and set to less than 0.2 mm in order to enhance sealing performance.

The sealed rolling bearing according to the above-described Example 1 finds application in pulleys, alternators, electromagnetic clutches and some other devices.

The following tests were conducted to prove the effect of Example 1.

### [Seal abrasion test]

### (1) Conditions

Revolutions per minute: 5500 rpm
Operation time: 24 hours
Remarks: Samples were prepared by leaving them in an atmosphere of 60 °C for one hour and then naturally cooling them down to induce a seal adhesion phenomenon of the seal lip.

### (2) Results

**[Table 1]**

| radius of curvature R of the contact tip | abrasion loss of the contact tip |
|---|---|
| 0.05 mm | 0.10 mm |
| 0.1 mm | 0 mm |

### [Muddy water test]

### (1) Conditions

Revolutions per minute: 2000 rpm
Operation time: 3 hours
Remarks: Kanto loam powder of JIS class 8 (10 wt%)

### (2) Results

**[Table 2]**

| radius of curvature R of the contact tip | muddy water penetration |
|---|---|
| 0.05 mm | ○ |
| 0.1 mm | ○ |
| 0.2 mm | X |

| | |
|---|---|
| ○: no penetration of muddy water X: penetration of muddy water | |

It should be understood that the embodiment disclosed herein is to be taken as an example in every point and is not limited. The scope of the present invention is defined not by the above described embodiment but by the appended claims. All changes that fall within means and bounds of the claims or equivalence of such means and bounds are intended to be embraced by the claims.

## Claims

1. A sealed rolling bearing comprising:
an inner ring including an inner raceway on its outer peripheral surface;
an outer ring including an outer raceway on its inner peripheral surface;
a plurality of rolling elements rotatably disposed between the inner raceway and the outer raceway; and
a sealing member sealing an internal space between the inner raceway and the outer raceway, wherein
the outer ring has a groove at a side of the outer raceway on the inner peripheral surface, the groove engaged with an outer rim of the sealing member,
the inner ring has a seal groove at a side of the inner raceway on the outer peripheral surface and a shoulder portion between the seal groove and an edge of the inner ring, the sealing member being in contact with the seal groove,
the sealing member is made of an elastic member and a metal core reinforcing the elastic member, is shaped into an annulus as a whole and includes an engaging portion fitted entirely into the groove formed on the inner peripheral surface of the outer ring and a seal lip formed at an edge of the elastic member,
the seal lip abuts against the raceway-side groove wall of the seal groove adjacent to the inner raceway,
the seal lip has an arc-shaped contact tip, and
the contact tip has a radius of curvature R ranging from 0.1 mm to less than 0.2 mm.

2. The sealed rolling bearing according to claim 1, wherein
a tangent line at the extremity of the arc-shaped contact tip is parallel with the raceway-side groove wall of the seal groove adjacent to the inner raceway.

3. The sealed rolling bearing according to claim 1, wherein
the sealing member includes a labyrinth lip integrally formed with the seal lip, the seal lip is in contact with the raceway-side groove wall of the seal groove, and the labyrinth lip projects above the shoulder portion.

4. The sealed rolling bearing according to claim 1, wherein
a shoulder portion-side corner is formed on the boundary between the shoulder portion-side groove wall of the seal groove and the shoulder portion,
the bottom surface of the seal lip is continuously connected with the bottom surface of the labyrinth lip through a step portion located above the shoulder portion-side groove wall of the seal groove, the diameter of the bottom surface of the labyrinth lip being larger than that of the seal lip,
the shoulder portion, and the shoulder portion-side groove wall, and the shoulder portion-side corner form a bent wall on the inner ring, while the step portion and the bottom surfaces form a bent wall on the sealing member, the bent walls face each other, and a clearance created between the bent walls defines a labyrinth seal.

5. The sealed rolling bearing according to claim 4, wherein
the shoulder portion is smaller in diameter than a raceway-side flat surface adjacent to the inner raceway by size S.

6. The sealed rolling bearing according to claim 5, wherein
the bottom surface of the labyrinth lip is inclined at a constant angle θ with respect to the shoulder portion.

7. The sealed rolling bearing according to claim 1, wherein
the elastic member of the sealing member is made of any one of nitrile rubber, acrylic rubber and fluorine-contained rubber.

8. The sealed rolling bearing according to claim 1 is applicable to any one of pulleys, alternators and electromagnetic clutches.
